# EUROPÄISCHE PATENTSCHRIFT

(11) **EP 0 322 698 B1**
(45) Veröffentlichungstag und Bekanntmachung des Hinweises auf die Patenterteilung: **10.02.1993**
(21) Anmeldenummer: 88121218.7
(22) Anmeldetag: 19.12.1988
(51) Int. Cl.: G05B 19/04

(54) **Verfahren für die Übertragung von Informationen**
Methode for the transmission of information
Méthode pour la transmission d'informations

(30) Priorität: 24.12.1987 DE 3744208
(43) Veröffentlichungstag der Anmeldung: 05.07.1989
(73) Patentinhaber: MASCHINENFABRIK RIETER AG, CH-8406 Winterthur (CH)
(72) Erfinder: Meyer, Urs, CH-8172 Niederglatt (CH)

(56) Entgegenhaltungen:
- EP-A- 0 090 766
- EP-A- 0 134 174
- DE-A- 2 521 388

## Beschreibung

Die Erfindung betrifft ein Verfahren nach Oberbegriff von Anspruch 1 und eine Schaltung für die Übertragung von Informationen bei einer eine Vielzahl von Produktionsstellen aufweisenden Herstellungsmaschine, insbesondere Garnherstellungsmaschine, bei der jeder Produktionsstelle eine jeweilige Überwachungsstelle mit Überwachungssensor zugeordnet ist, wobei die Signale der Überwachungsstellen über Leitungen an eine Zentraleinheit angelegt werden. Eine Schaltung gleicher Gattung ist aus der EP-A-90766 bekannt. Diese offenbart eine elektronische Abfrageeinrichtung zur Überwachung einer Vielzahl von Fadenlaufstellen an einer Textilmaschine. Zu diesem Zweck wird an jeder Laufstelle eine Überwachungsstelle in Form eines Meßkopfes zur Feststellung eines Fadenbruches vorgesehen und die Signale der Meßköpfe werden durch eine Abfrageschaltung einer eine Zentraleinheit bildenden Anzeige- oder Steuervorrichtung über Leitungen angelegt. Die bekannte Schaltung zeichnet sich dadurch aus, daß jedem Meßkopf ein bistabiles Steuermittel mit einem Dateneingang und einem Takteingang zugeordnet ist, wobei die bistabilen Steuermittel über ihre Dateneingänge in Serie geschaltet sind und die Takteingänge an einem gemeinsamen Taktgeber angeschlossen sind. Durch die serielle Verbindung der bistabilen Sternermittel entsteht der Nachteil, daß ein Versagen eines Steuermittels zu einem Ausfall der gesamten Schaltung führt. Dies ist bei einer Textilmaschine, die häufig mehr als 1000 Fadenlaufstellen aufweist, ein großer Nachteil, da die Gefahr eines solchen Versagens bei einer von so vielen Produktionsstellen stets gegeben ist. Auch führt die bekannte Anordnung zu einem Verkabelungsaufwand, der zwar im Vergleich zu anderen bekannten Schaltungen verhältnismäßig klein ist, jedoch immer noch unerwünscht hoch liegt.

Ein Beispiel für einen Fadenbruchdetektor ist in der CH-A-479 478 angegeben. Eine Verbesserung des Fadenbruchsensors ist in der DE-A-2 313 959 erläutert, wobei das Ausgangssignal des Fadenbruchsensors in einer Auswerteschaltung ausgewertet wird, deren Ausgang eine Alarmvorrichtung auslöst oder eine Steuervorrichtung zum selbsttätigen Stillsetzen des Fadenlieferwerks steuert. Es ist für jeden Fadenbruchsensor eine derartige Auswerteschaltung vorgesehen, die genannte Schrift offenbart jedoch nicht, wie die einzelnen Alarmsignale an den Ausgangsklemmen der Auswerteschaltungen an eine zentrale Überwachungseinheit übergeben werden. Eine Möglichkeit, dies zu erreichen, ist in der DE-OS 2 731 017 offenbart, bei der zum Überwachen einer laufenden Folge von Arbeitsstellen einer Textilmaschine auf Fadenbruch ein Tastkopf auf einer Führungsschiene an den Arbeitsstellen zur berührungslosen Aufnahme von elektrischen Signalen vorbeigeführt wird, wobei das Zugband für den Tastkopf als metallisches, elektrisch leitendes Zugband ausgebildet ist, das die elektrische Verbindung zwischen dem Tastkopf und einer Zentraleinheit bildet.

Ein bekanntes Verfahren nach Oberbegriff des Anspruchs 1 benutzt eine Adressiereinrichtung für die Überwachungsstellen und eine Sendeeinrichtung von den Überwachungsstellen an die Zentraleinheit, von welchen Messdaten nach Erkennen der Adressen an die Zentraleinheit zurückgesandt werden können. Der technische Aufwand zur Durchführung des Verfahrens ist beträchtlich, da neben der Adressiereinrichtung an jeder Überwachungssstelle eine Adressenerkennungseinrichtung vorhanden sein muss und weiterhin eine Sendeeinrichtung nötig ist, die nach Erkennen der Adresse an der betreffenden Überwachungsstelle eine Übermittlung von Messdaten vornimmt.

Es ist Aufgabe der Erfindung, ein vereinfachtes Verfahren für die Übermittlung von Informationen von Überwachungsstellen zu schaffen, das preisgünstiger zu realisieren ist.

Weiterhin besteht die Aufgabe bei der vorliegenden Erfindung auf elektrischem Wege eine einfache Informationsübertragungsschaltung vorzusehen, die bei geringem Verkabelungsaufwand sowie geringem elektronischen Aufwand überall bei Herstellungsmaschinen eingesetzt werden kann, bei denen eine Vielzahl von zu überwachenden Produktionsstellen vorhanden sind, und zwar ohne daß das Versagen eines Bauelementes an einer bestimmten Überwachungsstelle zu einem Versagen der gesamten Informationsübertragung führt, und die zugleich in der Lage ist, die Energie für die an den einzelnen Produktionsstellen vorgesehenen Betätigungsvorrichtungen zu übertragen.

Die Lösung dieser Aufgabe ist für alle Produktionsmaschinen wichtig, bei denen eine Vielzahl von gleichartigen Produktionsstellen vorhanden ist und der Wunsch besteht, an den einzelnen Produktionsstellen einen bestimmten Zustand zu erfassen, den betreffenden Produktionsvorgang diesem Zustand anzupassen und schließlich die Information über den betreffenden Zustand von sämtlichen Produktionsstellen an eine Zentralauswertung weiterzuleiten. Bei einer Ringspinnmaschine mit vielen Spinnstellen z.B. stellt an jeder Spinnstelle ein Fadensensor fest, ob die betreffende Spinnstelle normal Garn produziert. Ein elektronischer Verstärker setzt das Sensorsignal in ein passendes elektrisches Auslösesignal für eine Luntenstoppeinrichtung um, die der betreffenden Spinnstelle zugeordnet ist. Die Luntenstoppvorrichtung bewirkt ihrerseits eine Unterbrechung der Luntenzufuhr, sobald die normale Funktion der Spinnstelle gestört ist. Über eine Meldeleitung wird die Information "Spinnstelle gestört" an die Zentraleinheit gemeldet, welche ihrerseits den Bediener über Anzahl und Ort der festgestellten Spinnstellen orientiert und eine Statistik über den gesamten Produktionsablauf erzeugt.

Es soll betont werden, daß bei allen bisher bekannten Lösungen für diesen Problembereich bei Textilmaschinen ein beträchtlicher elektrischer Verdrahtungsaufwand erforderlich war, um einerseits für jede Produktionsstelle die elektrische Speisung von Sensor, Auswerteelektronik und Auslösung sicherzustellen und andererseits, um die Information von der betreffenden Stelle zur zentralen Auswertung zu übertragen. Bei den bekannten Einrichtungen werden diese Aufgaben der Speisung einerseits und die Informationsübertragung andererseits getrennt gelöst.

Bekannt sind auch verschiedene Verfahren, um die Information der einzelnen Produktionsstellen gruppenweise zusammenzufassen und für die ganze Gruppe auf einem einzigen Leiterpaar codiert zu übertragen. Die entsprechenden Verfahren der Codierung sind bekannt und im wesentlichen normiert (serielle Schnittstelle z.B. RS 232). Der elektronische Aufwand für die entsprechende Codierung ist aber beträchtlich und jedenfalls prohibitiv hoch für den Einsatz an jeder einzelnen Spinnstelle.

Zur Lösung der obengestellten Aufgabe wird nunmehr erfindungsgemäß das Verfahren nach Anspruch 1 und eine Schaltung nach Anspruch 3 vorgeschlagen, wobei die Zentraleinheit eine eine Modulation aufweisende Speisespannung über eine allen Überwachungsstellen gemeinsame Leitung an diese anlegt, die Modulation aus einer Vielzahl von Abschnitten besteht, von denen jeder einem der Überwachungssensoren zugeordnet und von diesen mittels Zählung von einem durch die Modulation markierten Anfangspunkt aus erkannt wird, und wobei jeder Überwachungssensor beim Auftreten eines bestimmten Ereignisses eine Markierung des dem jeweiligen Überwachungssensor zugeordneten Abschnittes bzw. der Abschnitte vornimmt und sowohl diese Markierung als auch der betreffende Überwachungssensor von der Zentraleinheit erkannt wird.

Mit diesem Verfahren können alle Überwachungsstellen parallel an die Zentaleinheit angeschlossen werden, welche eine modulierte Speisespannung liefert. Diese Speisespannung dient einerseits für die Energiezufuhr zu den einzelnen Überwachungsstellen, enthält aber andererseits eine zeitliche Folge von Abschnitten, die den einzelnen Überwachungsstellen zugeordnet sind. Durch Zählen in den einzelnen Überwachungsstellen stellt jede Überwachungsstelle für sich fest, welcher Zeitabschnitt der Speisespannung ihr besonders zugeordnet ist und kann bei Auftreten eines bestimmten Ereignisses, z.B. Fadenbruch, den Zeitabschnitt entsprechend markieren, d.h. den Spannungsverlauf innerhalb des Zeitabschnittes ändern bzw. modulieren, wobei diese Markierung von der Zentraleinheit erkannt wird. Zur Bestimmung des Zeitpunkts des Eintreffens der genannten Markierung kann die Zentraleinheit ebenfalls feststellen, von welcher Überwachungsstelle sie stammt. Dieser Verfahrensablauf erfordert keine besondere Codierung, so daß eine Vielzahl von Schnittstellen nicht erforderlich ist. Nachdem jede Überwachungsstelle parallel an die Zentraleinheit angeschlossen ist, führt der Ausfall einer Überwachungsstelle nicht zu einem Versagen der gesamten Informationsübertragung. Nachdem die allen Überwachungsstellen gemeinsame Leitung gleichzeitig zur Speisung der Überwachungsstellen mit elektrischer Energie verwendet werden kann, die gegebenenfalls in diesen gespeichert wird, ist der Verdrahtungsaufwand minimal, denn es ist lediglich eine Zweidrahtleitung erforderlich, an die jede Überwachungsstelle mit lediglich zwei Klemmen angeschlossen werden muß.
Eine besondere Schaltung zur Lösung der oben gestellten Aufgabe zeichnet sich dadurch aus, daß die Zentraleinheit eine eine sich regelmäßig wiederholende Modulation aufweisende Speisespannung über ein Leitungspaar an den einzelnen Überwachungsstellen anlegt, von denen jede an das Leitungspaar angeschlossen ist, daß die Modulation aus mehreren einander folgenden gleichartigen Abschnitten besteht, von denen jeder einer der Überwachungsstellen zugeordnet und von dieser mittels einer Zähleinrichtung erkannt ist, daß jede Überwachungsstelle eine Markierungseinrichtung aufweist, welche beim Auftreten eines durch den zugeordneten Überwachungssensor festgestellten Ereignisses eine Markierung des der jeweiligen Überwachungsstelle zugeordneten Abschnittes bzw. der Abschnitte vornimmt, und daß die Zentraleinheit eine Erkennungsschaltung zur Erkennung der Markierungen sowie der den jeweiligen Markierungen zugeordneten Überwachungsstellen aufweist.

Die in der Zentraleinheit vorhandene Erkennungsschaltung zum Zuordnen der einzelnen Markierungen mit den jeweiligen Überwachungsstellen weist vorzugsweise ebenfalls eine Zähleinrichtung auf. Dies stellt eine einfache Maßnahme dar, um das erforderliche Zuordnen in der Zentraleinheit vorzunehmen, so daß auch hier der Schaltungsaufwand relativ niedrig liegt.

Eine besonders bevorzugte Ausführungsform zeichnet sich dadurch aus, daß die sich regelmäßig wiederholende aus mehreren einander folgenden gleichartigen Abschnitten bestehende Modulation in regelmäßigen Abständen Synchronisationsmarkierungen aufweist. Diese Synchronisationsmarkierungen machen es möglich, mit nur geringem elektronischem Aufwand die Zähleinrichtungen in den einzelnen Überwachungsstellen synchronisiert zu halten.

Die den jeweiligen Überwachungsstellen zugeordneten Zähleinrichtungen werden vorzugsweise durch jedes Auftreffen einer der Synchronisationsmarkierungen zurückgesetzt, was den besonderen Vorteil bringt, daß die Zählfähigkeit der einzelnen Zähleinrichtungen lediglich so groß sein muß, wie die Anzahl der insgesamt vorhandenen Produktionsstellen. Die Synchronisationsmarkierungen werden zuverlässig durch einen Taktgeber erzeugt, dessen Ausgangssignal zusätzlich mittelbar oder unmittelbar an der der Erkennungsschaltung zugeordneten Zähleinrichtung angelegt ist, so daß auch hier die Synchronisation einwandfrei gegeben ist.

Eine besonders bevorzugte Ausführung der erfindungsgemäßen Schaltung zeichnet sich dadurch aus, daß jede Überwachungsstelle mit elektrischer Energie gespeist ist, die ggf. einer Speicherschaltung angelegt ist, die einen Kondensator enthalten kann.

Eine besonders bevorzugte Ausführungsform zeichnet sich dadurch aus, daß jeder Produktionsstelle eine jeweilige elektrisch gespeiste Betätigungseinrichtung, z.B. Stoppeinrichtung, zugeordnet ist.

Die modulierte Speisespannung, die über das Leitungspaar den einzelnen Produktionsstellen zugeführt wird, wird somit ohne zusätzlichen Aufwand für eine weitere elektrische Aufgabe benutzt, nämlich die Zufuhr von Energie an die elektrisch gespeiste Betätigungseinrichtung. Auf diese Weise wird auch hier ein beträchtlicher Verkabelungsaufwand gespart.

Vorzugsweise wird vorgesehen, daß die Zentraleinheit eine Einrichtung aufweist, welche zur Ababe von das Blockieren der Betätigungseinrichtungen bewirkenden Signalen an die einzelnen Überwachungsstellen ausgebildet ist. Diese Ausführung beruht auf der Erkenntnis, daß es bei verschiedenen Herstellungsmaschinen wichtig ist, z.B. beim Anlauf derselben, z.B. beim Materialwechsel und Neuanspinnen, die vorgesehenen Betätigungseinrichtungen außer Kraft zu setzen, in dem genannten Beispiel die Luntenstoppvorrichtung zu blockieren. Bei einer einfachen Ausführung kann die Einrichtung zur Abgabe der das Blockieren der Betätigungseinrichtungen bewirkenden Signalen so ausgebildet sein, daß sie eine allgemeine Pegeländerung der modulierten Speisespannung vornimmt, welche von den einzelnen Produktionsstellen anerkannt wird.

Bei einer weiteren Ausführungsform wird vorgesehen, daß das Ausgangssignal jedes Überwachungssensors bei Feststellung des bestimmten Ereignisses die Auslösung der zugeordneten Betätigungseinrichtung bewirkt. Mit anderen Worten, wird die Auslösung der einer bestimmten Produktionsstelle zugeordneten Betätigungseinrichtung durch die in dieser Produktionsstelle vorgesehene Überwachungsstelle direkt vorgenommen, ohne daß das entsprechende Auslösungssignal erst von der zentralen Einheit geliefert werden muß, was aber grundsätzlich möglich wäre, denn die hierfür erforderliche Information könnte bei der erfindungsgemäßen Anordnung ebenfalls in der betreffenden Produktionsstelle zugeordneten Abschnitt der Speisespannung enthalten sein.

Bei der erfindungsgemäßen Schaltung weist die Erkennungsschaltung eine Schnittstelle, insbesondere eine serielle Schnittstelle nach RS 232 auf, mittels der die Zentraleinheit an einen Mikrocomputer angeschlossen werden kann, so daß die Produktionsmaschine in eine gesamte Produktionsanlage bzw. in ein Anlagen-Überwachungssystem integriert werden kann. Auch kann die genannte Schnittstelle für die Ankopplung an eine Alarmeinrichtung oder -anzeige dienen.

Bei einer besonders bevorzugten Ausführung ist die Speisespannung eine gleichgerichtete, nicht oder nicht wesentlich geglättete Wechselspannung, wobei jeder der genannten Abschnitte der Speisespannung eine Halbwelle der gleichgerichteten Wechselspannung ist. Die Verwendung einer gleichgerichteten Wechselspannung ist besonders vorteilhaft, weil sie einfach aus dem lokal vorhandenen Stromnetz erzeugt werden kann, wobei die Frequenz des Stromnetzes üblicherweise sehr stabil ist und somit eine genaue Grundlage für das zeitliche Zuordnen der einzelnen Abschnitte an den einzelnen Produktionsstellen bildet.

Mit dieser Anordnung wird die Markierung der jeder Überwachungsstelle zugeordneten Halbwelle vorzugsweise durch einen Kondensator vorgenommen, der kurzfristig durch das Schließen eines das Ausgangssignal des zugeordneten Überwachungssensors geschlossenen Schalters aufgeladen wird und somit eine Lücke innerhalb der betreffenden Halbwelle verursacht, welche von der Erkennungsschaltung erkannt wird.

Weitere bevorzugte Ausführungsformen der erfindungsgemäßen Schaltung sind in den weiteren Unteransprüchen 16 bis 21 angegeben.

Wie aus dem vorher Gesagten ersichtlich, ist die erfindungsgemäße Lösung der obengestellten Aufgabe durch zwei Gedanken geprägt:
- die Speisung der einzelnen Überwachungsstellen bzw. Betätigungseinrichtungen erfolgt über eine gemeinsame Zweidrahtleitung, welche gleichzeitig zur Übertragung der Information benutzt wird.
- Die Aufgabe der Synchronisation für die seriell übertragene Information wird von der Speisespannung übernommen, und zwar durch die Welligkeit der Spannung, welche durch die Netzfrequenz entsteht.

Die Verwirklichung dieser beiden Gedanken ergibt eine entscheidende Einsparung an Bauteilen und Verdrahtungsaufwand.

Die Erfindung wird im nachfolgenden näher erläutert anhand eines Ausführungsbeispiels mit Bezugnahme auf die Zeichnung, welche zeigt:
- Fig. 1: ein Blockschaltbild der erfindungsgemäßen Schaltung, die besonders für eine Ringspinnmaschine konzipiert ist,
- Fig. 2: den Verlauf der modulierten Speisespannung für die Blockschaltung der Fig. 1, und
- Fig. 3: weitere Einzelheiten der als Übergabeschaltung bezeichneten Blöcke der Fig. 1.

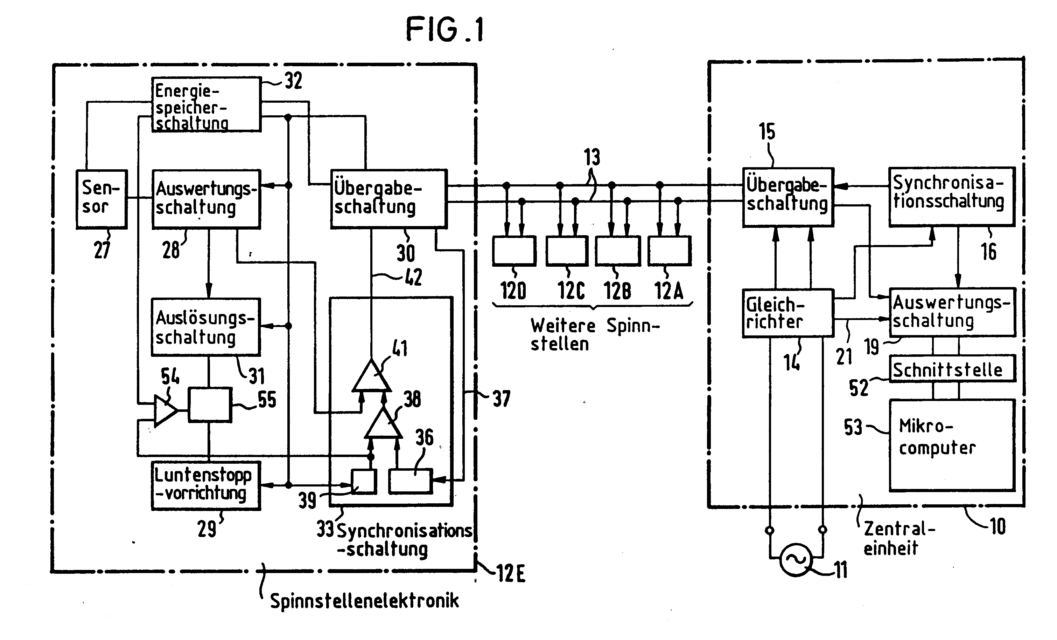

Das Blockschaltbild der Fig. 1 zeigt die Zentraleinheit 10, die an dem Stromnetz 11 angeschlossen wird. Die Zentraleinheit ist an eine Vielzahl von gleichartigen Produktionsstellen 12A-12E über eine Zweidrahtleitung 13 angeschlossen. Am Beispiel einer Ringspinnmaschine sind diese Produktionsstellen Spinnstellen. Gezeigt werden in Fig. 1 lediglich fünf solche Spinnstellen, in der Praxis sind es jedoch eine weitaus größere Zahl, z.B. 1000. Die erfindungsgemäße Schaltung kann mit einer beliebigen Zahl von Spinnstellen verwendet werden.

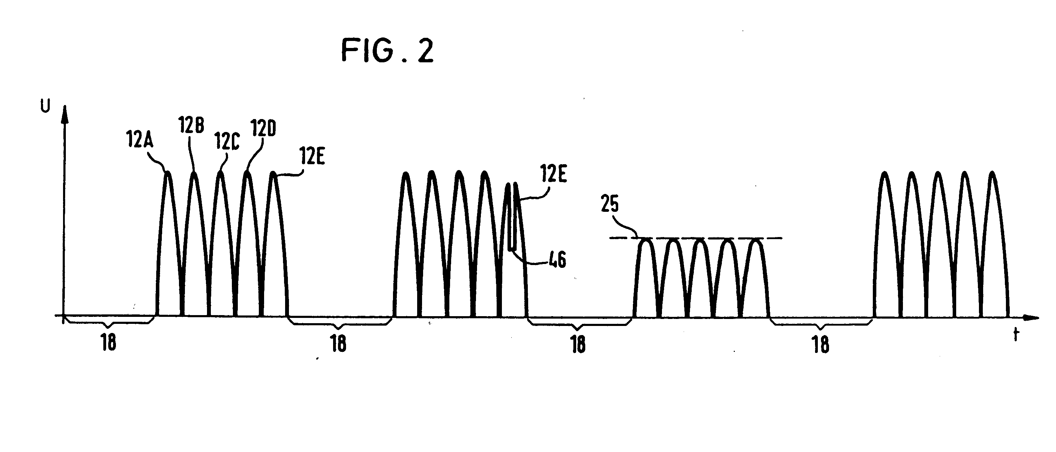

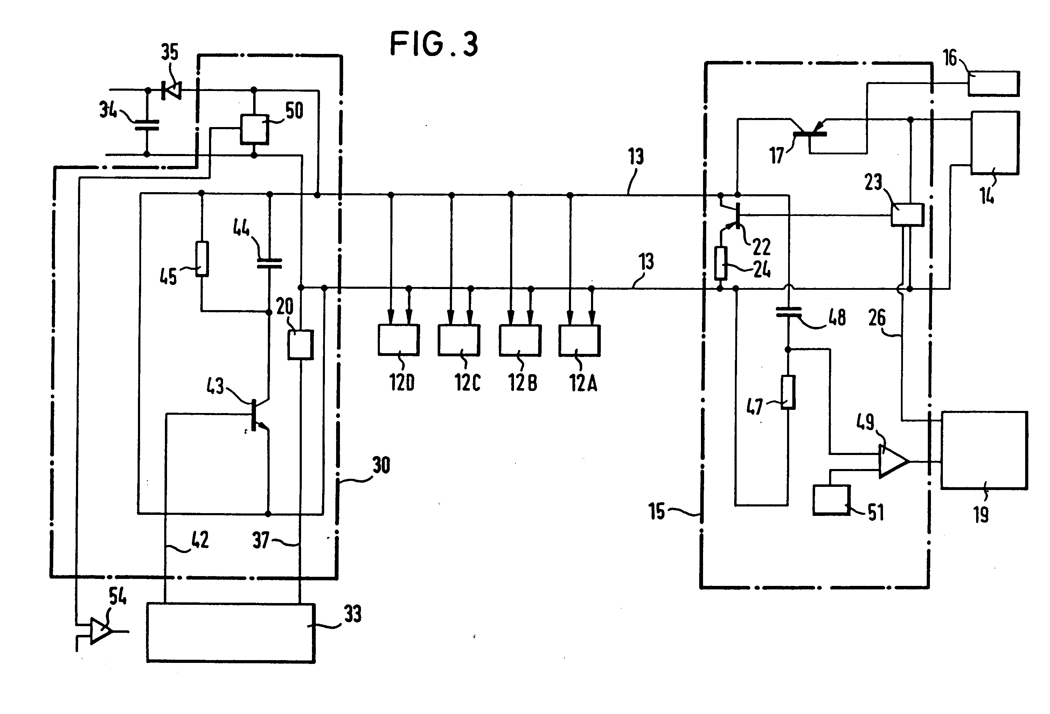

Die Netzspannung wird in der Zentraleinheit zunächst an einen Gleichrichter 14 angelegt, dessen Ausgangsspannung die Wellenform nach Fig. 2 aufweist, jedoch ohne die dort gezeigte Synchronisationslücke 18. Das gleichgerichtete Signal wird einerseits an eine Übergabeschaltung 15 angelegt, andererseits an eine Synchronisationsschaltung 16, die im wesentlichen aus einem Taktgeber besteht, welcher, von der gleichgerichteten Spannung gespeist, in regelmäßigen Abständen ein Taktsignal an die Übergabeschaltung 15 abgibt. Der Taktgeber der Synchronisationsschaltung ist so ausgelegt, daß sie nach Durchlaufen einer bestimmten Anzahl von Halbwellen, die der Anzahl der Produktionsstellen entspricht, ein Signal erzeugt, das die Dauer von etwa vier Halbwellen aufweist. Dieses Signal wird an die Basis eines Schalttransistors 17 (Fig. 3) angelegt, der normalerweise leitend ist und die Halbwellen der gleichgerichteten Speisespannung an die Zweidrahtleitung anlegt. Beim Vorhandensein des Taktsignales wird der Transistor 17 jedoch nicht leitend, so daß die Synchronisationslücke 18 der Fig.2 entsteht, und zwar für eine Dauer, welche durch die Dauer des Taktsignals bestimmt ist, im vorliegenden Beispiel für vier Halbwellen. Das Taktsignal der Synchronisationsschaltung ist gleichzeitig an eine Auswerteschaltung 19 angelegt, die einen Zähler enthält, welcher jedesmal vom Taktsignal neu gesetzt wird und nach dem Setzen zu zählen beginnt, und zwar zählt der Zähler jede Halbwelle des gleichgerichteten Signals das ebenfalls vom Gleichrichter 14 über die Leitung 21 erhalten wird.

Wie aus der Fig. 3 ersichtlich, enthält die Übergabeschaltung einen zweiten Transistor 22, dessen Basis an einen von der Betriebsperson betätigbaren Schalter 23 angeschlossen ist. Der Schalter 23, dessen Energiezufuhr vom Gleichrichter kommt, hat die Aufgabe, die Basis des normalerweise nichtleitenden Transistors 22 so anzusteuern, daß er nunmehr leitend wird, woraufhin ein Strom durch den Widerstand 24 fließt, so daß der Pegel der an die Zweidrahtleitung angelegte Spannung abgesenkt wird, so wie bei 25 in Fig. 2 angezeigt. Durch Öffnen des Schalters kann dieser Pegel auf sein ursprüngliches Niveau zurückgebracht werden, indem der Transistor wieder in einen nichtleitenden Zustand versetzt wird. Mit 26 wird angedeutet, daß der Schalter 23 nicht nur von der Betriebsperson betätigt werden kann, sondern, falls erwünscht, von einem zentralen Bedienungspult bzw. einem Computer aus.

Die an die Zweidrahtleitung angelegte Speisespannung mit der in Bild 2 gezeigten Form wird gleichzeitig bei allen Produktionsstellen empfangen, und zwar in einer weiteren Übergabeschaltung, deren wesentliche Bestandteile in der Fig. 3 ersichtlich sind.

Wie aus Fig. 1 ersichtlich, besteht jede Produktionsstelle im vorliegenden Beispiele jede Spinnstelle, aus der Übergabeschaltung 30, einem Fadenbruchsensor 27, einer Auswertungsschaltung 28 zur Auswertung des Ausgangssignal des Fadenbruchsensors, einer Luntenstoppvorrichtung 29, einer Auslösungsschaltung 31 für die Luntenstoppvorrichtung, einer elektrischen Speicherschaltung 32 zur Speicherung von Energie für den Fadenbruchsensor, der Auslösungsschaltung und der Betätigungsvorrichtung, sowie einer Synchronisationsschaltung 33.

Der Energiespeicher 32 besteht aus einem Kondensator 34, der zwischen den zwei Drähten der Zweidrahtleitung 13 liegt und einem Gleichrichter in Form einer Diode 35, welche sicherstellt, daß die im Kondensator gespeicherte Energie nicht in die Zweidrahtleitung zurückfließt.

Der Fadenbruchsensor 27 und die Auswertungsschaltung 28 können jede beliebige Form haben. Der Sensor kann z.B. eine Lichtschranke sein, dessen Ausgangssignal durch die Auswertungsschaltung 28 in einen rechteckigen Schaltimpuls umgewandelt wird. Alternativ hierzu könnte der Fadenbruchsensor und die Auswertungsschaltung entsprechend dem Fadenbruchdetektor der DE-A-2319959 ausgebildet werden. Der Ausbildung dieser beiden Schaltungen stehen eine Vielzahl von Möglichkeiten zur Verfügung, die in der Technik gut bekannt sind.

Die Auslösungsschaltung 31 und die Betätigungseinrichtung 29 sind ebenfalls für sich bekannt. Vorzugsweise handelt es sich bei der Auslösungsschaltung 31 sowie der Luntenstoppvorrichtung 29 um die Stoppeinrichtung, die in der gleichzeitig eingereichten deutschen Patentanmeldung mit der Bezeichnung "Spinnmaschine mit einer Vielzahl von Spinnstellen" der gleichen Anmelderin beschrieben sind.

In diesem Fall wird die Luntenstoppeinrichtung durch Schwerkraft bzw. Federkraft betätigt, wobei ein mechanischer Teil der Betätigungsvorrichtung normalerweise mittels eines Permanentmagneten in einer unwirksamen Stellung gehalten wird. Durch Energiezufuhr zu einem Elektromagneten, an dessen Kern der Permanentmagnet normalerweise haftet, wird eine Verdrängung der magnetischen Feldlinien innerhalb des Kernes des Elektromagneten bewirkt, so daß die Haftung des Permanentmagneten an diesen Kern aufgehoben wird, wodurch die Schwerkraft bzw. Federkraft die Betätigung der Luntenstoppvorrichtung vornimmt. Die Energie für den Elektromagneten, welche ein Teil der Luntenstoppvorrichtung darstellt, kommt in diesem Fall vom Energiespeicher 32. Die Zufuhr der Energie an den Elektromagneten wird von der Auslösungsschaltung 31 aufgrund des Steuersignals von der Auswertungsschaltung 28 gesteuert. Der Fadenbruchsensor 27 sowie die Luntenstoppvorrichtung 29 arbeiten unabhängig von der Synchronisation. Es ist jedoch wichtig, daß ein Garnbruch der Zentraleinheit gemeldet wird, was über die Übergabeschaltungen 30, 15 erfolgt. Zu diesem Zweck enthält die Spinnstellen-Elektronik den Zähler 36, der über eine Leitung 37 an einen in der Übergabeschaltung vorhandenen Lückendetektor 20 angeschlossen ist und jedesmal zurückgesetzt wird, wenn die Synchronisationslücke 18 erscheint. Der Zähler zählt dann erneut von Null an und sein Ausgangssignal ist an einen ersten Komparator 38 angelegt. Der zweite Eingang dieses Komparators kommt von einem einstellbaren Zahlgeber 39, der eine Zahl erzeugt, welche der Nummer der Spinnstelle entspricht. Der Komparator 38 gibt nur dann ein Signal ab, wenn der Zähler und der Zahlengeber die gleiche Zahl aufweisen. Dieses Signal wird an einen zweiten Komparator 41 angelegt, dessen Zweiteingang das Ausgangssignal der Auswerteschaltung 28 erhält. In dem Moment, in dem diese beiden Signale vorhanden sind, erzeugt der zweite Komparator 41 ein Ausgangssignal, das über eine Leitung 42 an die Basis eines dritten Transistors 43 angelegt ist. Dieses Signal entsteht in dem Moment, wenn die zugeordnete Halbwelle 12E an dieser Spinnstelle ankommt.

Wie ersichtlich, liegt der dritte Transistor 43 in Reihe mit einem weiteren Kondensator 44 (0.01 µF) zwischen den beiden Drähten der Zweidrahtleitung. Ein Widerstand 45 (10 Kiloohm) ist parallel zu dem Kondensator geschlossen und sorgt dafür, daß dieser in einem entladenen Zustand ist. Durch das Signal vom zweiten Komparator wird der dritte Transistor leitend gemacht, so daß der Kondensator kurzfristig aufgeladen wird. Die gemeinsame Zweidrahtleitung wird somit während einer Dauer von einigen Mikrosekunden gewissermaßen kurzgeschlossen und es entsteht in der zugeordneten Halbwelle einer entsprechenden Lücke 46, die von der Übergabeschaltung in der Zentraleinheit erfaßt und aufgrund der Zuordnung zwischen Halbwellen und Spinnstellen als Fadenbruchsignal der Spinnstelle 12E erkannt wird.

Die Ausbildung der Übergabeschaltung 5 der Zentraleinheit geht ebenfalls aus der Fig. 3 hervor. Die Auswertung der kurzen Impulse, welche durch den Fadenbruchsensor auf die Speisespannung aufgeprägt sind, erfolgt durch diese Übergabeschaltung 15. Von der gemeinsamen Zweidrahtleitung wird die Spannung abgegriffen und über die Kombination aus Widerstand 47 und Kondensator 48 gefiltert, welche zusammen ein sog. Hochpaßfilter bilden. Typische Werte sind Widerstand 47 1 Kiloohm, Kondensator 48 0,01 uF. Auf diese Weise entsteht am Widerstand 47 ein Abbild des kurzen Impulses. Diese Spannung wird in an sich bekannter Weise an einen dritten Komparator 49 mit einem entsprechenden Referenzeingang 51 angelegt, wobei der Komparator 44 einen sauberen Rechteckimpuls für die weitere Verarbeitung des Signals mit digitaler Schaltungstechnik erzeugt. Sowohl dieses Signal als auch das Taktsignal werden dann über eine serielle Schnittstelle 52, gegebenenfalls nach weiterer digitaler Verarbeitung, an einen Mikrocomputer 53 angelegt, der dafür sorgt, daß die Störung gemeldet und angezeigt wird und andererseits durch entsprechende Programmierung in der Lage ist, eine Statistik über die erfolgten Fadenbrüche zu erstellen.

Sollte die Betriebsperson es wünschen, die Luntenstoppeinrichtung zu blockieren, so erfolgt dies, wie vorher erwähnt, durch Absenkung der an die Zweidrahtleitung angelegte gleichgerichtete Spannung. Diese Pegeländerung wird durch einen elektrischen Schwellenwertsensor 50 in jeder Spinnstelle erkannt und das Ausgangssignal dieser Schwellenwertschaltung wird mit dem Ausgangssignal des einstellbaren Zahlgebers für die Spinnstelle an einen weiteren Komparator 54 angelegt, dessen Ausgangssignal einen elektronischen Schalter 55 ansteuert und die Stromzufuhr zu dem Elektromagneten der Luntenstoppeinrichtung verhindert. Diese Schaltung hat den Vorteil, daß sie sowohl bei manuellem Schließen des Schalters 23 als auch bei elektronischem Schließen eines entsprechenden elektronischen Schalters vom Mikrocomputer 53 das Blockieren der Betätigungseinrichtung bewirkt. Im ersten Fall werden alle Spinnstellen gleichzeitig blockiert, im zweiten Fall kann dies selektiv oder gruppenweise erfolgen.

Die Wirkungsweise der beschriebenen Schaltung ist wie folgt:

Der Gleichrichter 14 erzeugt die gleichgerichtete nichtgeglättete modulierte Spannung, die in der Fig. 2 ersichtlich ist. Über die Synchronisationsschaltung 16 werden dann die Synchronisationslücken erzeugt, die jedesmal, wenn sie auftreten, ein Zurücksetzen der Zähler 36 der einzelnen Spinnstellen Elektronikeinheiten verursachen. Durch die gleichgerichtete Speisespannung werden die Kondensatoren 34 der einzelnen Energiespeicher der einzelnen Produktionsstellen aufgeladen, wobei diese gespeicherte Energie für den Betrieb der einzelnen Schaltungsteile der Spinnstellen Elektronikeinheit sorgt. Beim Auftreten eines Fadenbruches wird ein entsprechendes Signal vom Fadenbruchsensor 27 erzeugt und in der Auswertungsschaltung 28 in ein entsprechendes Steuersignal umgewandelt. Dieses Steuersignal dient über die Auslösungsschaltung 31 zur Auslösung der Luntenstoppvorrichtung und wird gleichzeitig zur Erzeugung einer Markierung in der der Spinnstelle 12E zugeordneten Halbwelle der Speisespannung herangezogen. Diese Markierung hat im vorliegenden Beispiel die Form einer engen Lücke 46 und wird durch das Aufladen eines Kondensators 44 erzeugt, wobei die Synchronisation über den Zähler 36 mit den Komparatoren 38, 41 sowie den Zeitgeber 39 in der beschriebenen Weise sichergestellt wird. Die Lücke 46 in der betreffenden Halbwelle wird von der Übergabeschaltung 15 bei der zentralen Einheit 10 mittels des Hochpaßfilters 47, 48 erkannt und mit dem entsprechenden Zeitsignal an den Mikrocomputer 53 weitergeleitet, welcher den Fadenbruch anzeigt und gegebenenfalls eine Statistik über das Auftreten der Fadenbrüche sowie der Zeit bis zu deren Behebung erzeugt. Sollte z.B. aufgrund einer Produktionsänderung die Auslösung der einzelnen Lückenstoppeinrichtungen blockiert werden, so wird der Pegel der Halbwelle für die betroffenen Produktionsstellen mittels des Schalters 23 abgesenkt, was bei den einzelnen Produktionsstellen von betreffendem Schwellenwertdetektor 50 und Synchronisationsschaltung 33 erkannt wird, wodurch ein entsprechendes Signal an den Transistor angelegt wird, so daß eine Beaufschlagung der Luntenstoppeinrichtung mit elektrischer Energie nicht möglich ist und diese blockiert ist.

## Patentansprüche

1. Verfahren für die Übertragung von Informationen bei einer eine Vielzahl von Produktionsstellen aufweisenden Herstellungsmaschine, insbesondere Garnherstellungsmaschine, bei der jeder Produktionsstelle eine jeweilige Überwachungsstelle mit Überwachungssensor zugeordnet ist, wobei die Signale der Überwachungssensoren über Leitungen an eine Zentraleinheit angelegt werden, wobei
die Zentraleinheit eine eine Modulation aufweisende Speisespannung über eine allen Überwachungsstellen gemeinsame Leitung an diese anlegt, und die Modulation aus einer Vielzahl von Abschnitten in Form von Blöcken von Spannungsimpulsen besteht, von denen jeder einem der Überwachungssensoren zugeordnet ist,
dadurch gekennzeichnet, dass von den Überwachungssensoren mittels Zählung von einem durch die Modulation markierten Anfangspunkt aus jeder Block erkannt wird, und daß jeder Überwachungssensor beim Auftreten eines bestimmten Ereignisses eine Markierung des dem jeweiligen Überwachungssensor zugeordneten Abschnittes bzw. Blocks vornimmt und daß sowohl diese Markierung als auch der betreffende Überwachungssensor von der Zentraleinheit erkannt wird.

2. Verfahren nach Anspruch 1, dadurch gekennzeichnet, daß die allen Überwachungsstellen gemeinsame Leitung gleichzeitig zur Speisung der Überwachungsstelle mit elektrischer Energie verwendet wird, die gegebenenfalls in diesen gespeichert wird.

3. Elektrische Informationsübertragungsschaltung, insbesondere zur Durchführung des Verfahrens nach Anspruch 1 oder 2, bei einer eine Vielzahl von Produktionsstellen aufweisende Herstellungsmaschine, insbesondere Garnherstellungsmaschine, bei der jeder Produktionsstelle eine jeweilige Überwachungsstelle mit Überwachungssensor zugeordnet ist, wobei die Signale der Überwachungssensoren über Leitungen an eine Zentraleinheit (10) angelegt sind, dadurch gekennzeichnet, daß die Zentraleinheit eine eine sich regelmäßig wiederholende Modulation aufweisende Speisespannung über ein Leitungspaar (13) an den einzelnen Überwachungsstellen (12A-12E) anlegt, von denen jede an das Leitungspaar angeschlossen ist, daß die Modulation aus mehreren einander folgenden gleichartigen Abschnitten in Form von Blöcken von Spannungsimpulsen besteht, von denen jeder einer der Überwachungsstellen zugeordnet und von dieser mittels einer Zähleinrichtung (36) erkannt ist, daß Jede Überwachungsstelle eine Markierungseinrichtung (43, 44) aufweist, welche beim Auftreten eines durch den zugeordneten Überwachungssensor (27) festgestellten Ereignisses eine Markierung (46) des der jeweiligen Überwachungsstelle zugeordneten Abschnittes bzw. Blocks vornimmt, und daß die Zentraleinheit eine Erkennungsschaltung (19, 47, 48) zur Erkennung der Markierungen sowie der den jeweiligen Markierungen zugeordneten Überwachungsstellen aufweist.

4. Elektrische Informationsübertragungsschaltung nach Anspruch 3, dadurch gekennzeichnet, daß die Erkennungsschaltung zum Zuordnen der einzelnen Markierungen mit den jeweiligen Überwachungsstellen eine Zähleinrichtung aufweist.

5. Elektrische Informationsübertragungsschaltung nach Anspruch 3 oder Anspruch 4, dadurch gekennzeichnet, daß die sich regelmäßig wiederholende aus mehreren einander folgenden gleichartigen Abschnitten bestehende Modulation in regelmäßigen Abständen Synchronisationsmarkierungen (18) aufweist.

6. Elektrische Informationsübertragungsschaltung nach Anspruch 5, dadurch gekennzeichnet, daß die den jeweiligen Überwachungsstellen zugeordneten Zähleinrichtungen (36) durch die Synchronisationsmarkierungen (18) zurückgesetzt werden.

7. Elektrische Informationsübertragungsschaltung nach einem der vorhergehenden Ansprüche 4 bis 6, dadurch gekennzeichnet, daß die Synchronisationsmarkierungen durch einen Taktgeber (16) erzeugt werden, dessen Ausgangssignal mittelbar oder unmittelbar der der Erkennungsschaltung (19, 47, 48) zugeordneten Zähleinrichtung angelegt ist.

8. Elektrische Informationsübertragungsschaltung nach einem der vorhergehenden Ansprüche 3 bis 7, dadurch gekennzeichnet, daß jede Überwachungsstelle über das Leitungspaar (13) mit elektrischer Energie gespeist ist, die gegebenenfalls einer Speicherschaltung (32) angelegt ist.

9. Elektrische Informationsübertragungsschaltung nach Anspruch 8, dadurch gekennzeichnet, daß die Speicherschaltung (32) einen Kondensator (34) enthält.

10. Elektrische Informationsübertragungsschaltung nach einem der Ansprüche 8 oder 9, dadurch gekennzeichnet, daß jeder Produktionsstelle eine jeweilige elektrisch gespeiste Betätigungseinrichtung (29) z.B. Stoppeinrichtung zugeordnet ist.

11. Elektrische Informationsübertragungsschaltung nach einem der Ansprüche 9 oder 10, dadurch gekennzeichnet, daß die Zentraleinheit eine Einrichtung (22, 23, 24) aufweist, welche zur Abgabe von das Blockieren der Betätigungseinrichtungen bewirkenden Signalen an die einzelnen Überwachungsstellen ausgebildet ist.

12. Elektrisch Informationsübertragungsschaltung nach einem der Ansprüche 9, 10 oder 11, dadurch gekennzeichnet, daß das Ausgangssignal jedes Überwachungssensors (27) bei Feststellung des bestimmten Ereignisses die Auslösung der zugeordneten Betätigungseinrichtung (29) bewirkt.

13. Elektrische Informationsübertragungsschaltung nach einem der vorhergehenden Ansprüche 3 bis 12, dadurch gekennzeichnet, daß die Erkennungsschaltung eine Schnittstelle insbesondere eine serielle Schnittstelle nach RS 232 aufweist.

14. Elektrische Informationsübertragungsschaltung nach einem der vorhergehenden Ansprüche 3 bis 13, dadurch gekennzeichnet, daß die Speisespannung eine gleichgerichtete, nicht oder nicht wesentlich geglättete Wechselspannung ist und daß jeder der genannten Abschnitte eine Halbwelle der gleichgerichteten Wechselspannung ist.

15. Elektrische Informationsübertragungsschaltung nach Anspruch 14, dadurch gekennzeichnet, daß die Markierung der jeder Überwachungsstelle (12A...E) zugeordneten Halbwelle durch einen in dieser Überwachungsstelle vorhandenen Kondensator (44) vorgenommen ist, der kurzfristig durch das Schließen eines durch das Ausgangssignal des zugeordneten Überwachungssensors (27) geschlossenen Schalters (43) aufgeladen wird und somit eine Lücke (46) innerhalb der betreffenden Halbwelle verursacht, welche von der Erkennungsschaltung (19, 47, 48) erkannt wird.

16. Elektrische Informationsübertragungsschaltung nach Anspruch 15, dadurch gekennzeichnet, daß in jeder Überwachungsstelle (12A...E) ein Widerstand (45) über den für die Markierung der zugeordneten Halbwelle vorgesehenen Kondensator (44) angeschlossen ist, wobei der Widerstand für das Wiederentladen des für die Markierung kurzfristig aufgeladenen Kondensators sorgt.

17. Elektrische Informationsübertragungsschaltung nach einem der Ansprüche 15 oder 16, dadurch gekennzeichnet, daß die Erkennungsschaltung (19, 47, 48) in der Zentraleinheit (10) einen Hochpaßfilter (47, 48) enthält, der an das Leitungspaar (13) angeschlossen ist und ein Abbild der kurzen Markierungsimpulse liefert, und ein Schaltungselement (49), das aus diesem Abbild einen sauberen Rechteckimpuls erzeugt.

18. Elektrische Informationsübertragungsschaltung nach Anspruch 5 und einem der Ansprüche 14 bis 17, dadurch gekennzeichnet, daß die Synchronisationsmarkierungen durch Synchronisationslücken (18) einer vorbestimmten Breite innerhalb der gleichgerichteten Wechselspannung gebildet sind.

19. Elektrische Informationsübertragungsschaltung nach Anspruch 11 und einem der Ansprüche 14 bis 18, dadurch gekennzeichnet, daß die Einrichtung (22, 23, 24) zur Abgabe von das Blockieren der Betätigungseinrichtungen an den einzelnen Überwachungsstellen bewirkenden Signalen eine Pegeländerung der gleichgerichteten Wechselspannung durchführt.

20. Elektrische Informationsübertragungsschaltung nach einem der Ansprüche 3 bis 19, dadurch gekennzeichnet, daß jede Überwachungsstelle (12A...E) eine Einrichtung (39) zur Erzeugung einer einstellbaren Referenznummer aufweist, die mit dem Zählsignal der Zähleinrichtung (36) der Überwachungsstelle an einen Komparator (38) angelegt ist, wobei das Ausgangssignal des Komparators an die Markierungseinrichtung (43, 44) angelegt ist.

21. Elektrische Informationsübertragungsschaltung nach einem der Ansprüche 3 bis 21, dadurch gekennzeichne, daß die Herstellungsmaschine eine Garnherstellungsmaschine ist, daß die Überwachungssensoren Fadenbruchsensoren (27) sind, daß an jeder Überwachungsstelle eine Betätigungseinrichtung in Form einer Luntenstoppvorrichtung (29) vorgesehen ist, wobei die Luntenstoppvorrichtungen durch die Ausgangssignale der Fadenbruchsensoren auslösbar sind.

## Claims

1. A method for the transmission of information at a manufacturing machine having a multitude of production places, in particular a yarn producing machine, at which each production place is allocated a respective monitoring place with monitoring sensor, here the signals of the monitoring sensors being fed via lines to a central unit, the central unit feeding a feed voltage having a modulation to all monitoring places via a line being common to all of them and the modulation consisting of a multitude of sections in form of blocks of voltage pulses of which each is allocated to a monitoring sensor,
characterized in that each block can be recognized from the monitoring sensors by means of counting a beginning point marked by the modulation and that each monitoring sensor upon the appearance of a certain event effects a marking of the section or block allocated to the respective monitoring sensor and that this marking as well as the monitoring sensor in question is recognized by the central unit.

2. A method as claimed in claim 1, characterized in that the line common to all monitoring places is simultaneously used for feeding the monitoring place with electric energy which, if necessary, is also stored in them.

3. An electrical information transmission circuit, especially for executing the method as claimed in claim 1 or 2, at a manufacturing machine having a multitude of production places, especially a yarn producing machine, at which each production place is allocated its respective monitoring place with monitoring sensor, the signals of the monitoring sensors being fed to a central unit (10) via lines, characterized in that, the central unit feeds a feed voltage having a continuously recurrent modulation via the line pair (13) to each monitoring position (12A-12E) of which each is connected to the line pair, that the modulation consists of several alike sections in form of blocks of voltage pulses following each other of which each is allocated to one of the monitoring place and is recognized by it by means of a counting device (36), that each monitoring place has a marking device (43, 44) which effects a marking (46) of the section or block allocated to the respective monitoring place upon appearance of an event detected by the allocated monitoring sensor (27), and that the central unit has a recognition circuit (19, 47, 48) for recognizing the markings as well as the monitoring places allocated to the respective markings.

4. An electrical information transmission circuit as claimed in claim 3, characterized in that the recognition circuit has a counting contrivance for allocating each marking with the respective monitoring places.

5. An electrical information transmission circuit as claimed in claim 3 or claim 4, characterized in that the periodically recurrent modulation consisting of several alike sections following each other has sychronization markings (18) at regular intervals.

6. An electrical information transmission circuit as claimed in claim 5, characterized in that the counting contrivances (36) allocated to the respective monitoring places are reset by the synchronisation markings (18).

7. An electrical information transmission circuit as claimed in one of the previous claims 4 to 6, characterized in that the synchronization markings are generated by a clock generator (16) whose output signal is fed indirectly or directly to the counting contrivance allocated to the recognition circuit (19, 47, 48).

8. An electrical information transmission circuit as claimed in one of the previous claims 3 to 7, characterized in that each monitoring place is supplied with electric energy via the line pair (13) which is, if necessary, fed to a storage circuit (32).

9. An electrical information transmission circuit as claimed in claim 8, characterized in that the storage circuit (32) contains a capacitor (34).

10. An electrical information transmission circuit as claimed in one of the claims 8 or 9, characterized in that each production place is allocated a respective actuation device (29), e.g., a stopping device, which is electrically fed.

11. An electrical information transmission circuit as claimed in one of the claims 9 or 10, characterized in that the central unit has a device (22, 23, 24) which is designed for the emission of signals to each monitoring place effecting a blocking of the actuation devices.

12. An electrical information transmission circuit as claimed in one of the claims 9, 10 or 11, characterized in that the output signal of each monitoring sensor (27) effects the release of the allocated actuation device (29) upon detecting the certain event.

13. An electrical information transmission circuit as claimed in in one of the previous claims 3 to 12, characterized in that the recognition circuit has an interface, especially a serial interface according to RS 232.

14. An electrical information transmission circuit as claimed in one of the previous claims 3 to 13, characterized in that the feed voltage is a rectified, not a or not essentially smoothed alternating voltage and that each of the said sections is a half-wave of the rectified alternating voltage.

15. An electrical information transmission circuit as claimed in claim 14, characterized in that the marking of the half-wave allocated to each monitoring place (12A...E) is effected by a capacitor (44) present in this monitoring place which is charged for a short period by the closing of a switch (43) closed by the output signal of the allocated monitoring sensor (27) and hence causing a gap (46) within the corresponding half-wave which is recognized by the recognition circuit (19, 47, 48).

16. An electrical information transmission circuit as claimed in claim 15, characterized in that in each monitoring place (12A...E) a resistance (45) is connected via the capacitor (44) provided for the marking of the allocated half-wave, the resistance taking care for the discharging of the capacitor which has been charged for a short time for the marking.

17. An electrical information transmission circuit as claimed in one of the claims 15 or 16, characterized in that the recognition circuit (19, 47, 48) in the central unit (10) contains a high pass filter (47, 48) which is connnected to the line pair (13) and supplies a waveshape of the short marking pulse, and a circuit element (49) which generates a clean square-wave pulse from this waveshape.

18. An electrical information transmission circuit as claimed in claim 5 and in one of the claims 14 to 17, characterized in that the synchronization markings are formed by the synchronization gaps (18) of a predetermined width within the rectified alternating current.

19. An electrical information transmission circuit as claimed in claim 11 and one of the claims 14 to 18, characterized in that the device (22, 23, 24) for the emission of signals causing the blocking of the actuation devices at each monitoring place effects a level change of the rectified alternating voltage.

20. An electrical information transmission circuit as claimed in one of the claims 3 to 19, characterized in that each monitoring place (12A...E) has an arrangement (39) for the generation of an adjustable reference number which is fed to the comparator (38) with the counting signal of the counting contrivance (36) of the monitoring place, the output signal of the comparator being fed to the marking device (43, 44).

21. An electrical information transmission circuit as claimed in one of the claims 3 to 21, characterized in that, the manufacturing machine is a yarn producing machine, that the monitoring sensors are thread breakage sensors (27), that at each monitoring place is provided an actuating device in the form of a sliver stopping device (29), here the sliver stopping device being triggerable via the output signals of the thread breakage sensors.

## Revendications

1. Procédé utilisé pour la transmission d'informations dans une machine de fabrication comprenant une pluralité de postes de production, particulièrement une machine de fabrication de fil, dans laquelle un poste de surveillance avec détecteur de surveillance est adjoint à chaque poste de production, les signaux des détecteurs de surveillance étant dirigés vers une unité centrale à l'aide de conduites, et où l'unité centrale applique aux postes de surveillance une tension d'alimentation possédant une modulation, à l'aide d'une conduite commune pour tous les postes, et la modulation est constituée d'une pluralité de sections en forme de blocs d'impulsions de tension dont chacun est adjoint à un des détecteurs de surveillance,
caractérisé par le fait que
chaque bloc est reconnu par les détecteurs de surveillance au moyen de comptage, depuis un point de départ marqué par la modulation, et que, lors de l'apparition d'un événement déterminé, chaque détecteur de surveillance réalise un marquage de la section respectivement du bloc adjoint au détecteur de surveillance correspondant, et que ce marquage ainsi que le détecteur de surveillance en question sont reconnus par l'unité centrale.

2. Procédé selon revendication 1,
caractérisé par le fait que
la conduite commune pour tous les postes de surveillance est en même temps utilisée pour l'alimentation en énergie électrique du poste de surveillance, énergie qui, le cas échéant, est emmagasinée dans celui-ci.

3. Circuit électrique de transmission d'informations, utilisé particulièrement pour la réalisation du procédé selon la revendication 1 ou 2, dans une machine de fabrication comprenant une pluralité de postes de production, particulièrement une machine de fabrication de fil, dans laquelle un poste de surveillance avec détecteur de surveillance est adjoint à chaque poste de production, les signaux des détecteurs de surveillance étant dirigés vers une unité centrale (10) à l'aide de conduites,
caractérisé par le fait que,
à l'aide d'une paire de conduites (13), l'unité centrale applique une tension d'alimentation, possédant une modulation se répétant régulièrement, aux postes de surveillance individuels (12A-12E), dont chacun est relié à la paire de conduites, que la modulation est constituée de plusieurs sections consécutives identiques en forme de blocs d'impulsions de tension, dont chacun est adjoint à un des postes de surveillance et est reconnu par celui-ci au moyen d'un arrangement compteur (36), que chaque poste de surveillance possède un arrangement de marquage (43, 44) qui, lors de l'apparition d'un événement constaté par le détecteur de surveillance adjoint (28), réalise un marquage (46) de la section respectivement du bloc adjoint au poste de surveillance en question, et que l'unité centrale possède un circuit de reconnaissance (19, 47, 48) servant à reconnaître les marquages ainsi que les postes de surveillance adjoints aux marquages correspondants.

4. Circuit électrique de transmission d'informations selon revendication 3,
caractérisé par le fait que
le circuit de reconnaissance utilisé pour coordonner les marquages individuels avec les postes de surveillance correspondants possède un arrangement compteur.

5. Circuit électrique de transmission d'informations selon revendication 3 ou revendication 4,
caractérisé par le fait que
la modulation se répétant régulièrement, constituée de plusieurs sections consécutives identiques, possède des marquages de synchronisation (18) espacés régulièrement.

6. Circuit électrique de transmission d'informations selon revendication 5,
caractérisé par le fait que
les arrangements compteurs (36) adjoints aux postes de surveillance correspondants sont mis en arrière par les marquages de synchronisation (18).

7. Circuit électrique de transmission d'informations selon l'une des revendications précédentes 4 à 6,
caractérisé par le fait que
les marquages de synchronisation sont produits par un générateur d'impulsions (16), dont le signal de sortie est amené directement ou indirectement vers l'arrangement compteur adjoint au circuit de reconnaissance (19, 47, 48).

8. Circuit électrique de transmission d'informations selon l'une des revendications précédentes 3 à 7,
caractérisé par le fait que
chaque poste de surveillance est alimenté en énergie électrique via la paire de conduites (13), énergie qui, le cas échéant, est appliquée à un circuit d'accumulation (32).

9. Circuit électrique de transmission d'informations selon revendication 8,
caractérisé par le que
le circuit d'accumulation (32) contient un condensateur (34).

10. Circuit électrique de transmission d'informations selon l'une des revendications 8 ou 9,
caractérisé par le fait
qu'à chaque poste de production est adjoint un dispositif d'actionnement correspondant (29), comme par exemple un dispositif d'arrêt, alimenté électriquement.

11. Circuit électrique de transmission d'informations selon l'une des revendications 9 ou 10,
caractérisé par le fait que
l'unité centrale possède un arrangement (22, 23, 24) qui est formé pour livrer aux postes de surveillance individuels des signaux provoquant le blocage des dispositifs d'actionnement.

12. Circuit électrique de transmission d'informations selon l'une des revendications 9, 10 ou 11,
caractérisé par le fait que
le signal de sortie de chaque détecteur de surveillance (27) provoque le déclenchement du dispositif d'actionnement (29) adjoint, lors de la détection de l'événement déterminé.

13. Circuit électrique de transmission d'informations selon l'une des revendications précédentes 3 à 12,
caractérisé par le fait que
le circuit de reconnaissance possède une jonction, particulièrement une jonction en série selon RS 232.

14. Circuit électrique de transmission d'informations selon l'une des revendications précédentes 3 à 13,
caractérisé par le fait que
la tension d'alimentation est une tension alternative redressée, non ou pas essentiellement aplanie, et que chacune des sections citées est une demi-ondulation de la tension alternative redressée.

15. Circuit électrique de transmission d'informations selon revendication 14,
caractérisé par le fait que
le marquage de la demi-ondulation adjointe à chaque poste de surveillance (12A...E) est effectué par un condensateur (44) présent dans ce poste de surveillance, qui est chargé à court terme par la fermeture d'un interrupteur (43) fermé par le signal de sortie du détecteur de surveillance adjoint (27), et provoque ainsi un interstice (46) à l'intérieur de la demi-ondulation correspondante, qui est reconnu par le circuit de reconnaissance (19, 47, 48).

16. Circuit électrique de transmission d'informations selon revendication 15,
caractérisé par le fait
qu'une résistance (45) est raccordée dans chaque poste de surveillance (12A...E), par le condensateur (44) prévu pour le marquage de la demi-ondulation adjointe, et où la résistance prend en charge la redécharge du condensateur, chargé à court terme pour le marquage.

17. Circuit électrique de transmission d'informations selon l'une des revendications 15 ou 16,
caractérisé par le fait que
le circuit de reconnaissance (19, 47, 48) situé dans l'unité centrale (10) contient un filtre passe-haut (47, 48) qui est raccordé à la paire de conduites (13) et livre une image des impulsions courtes de marquage, et un élément de circuit (49) qui produit une impulsion rectangulaire propre par cette image.

18. Circuit électrique de transmission d'informations selon revendication 5 et l'une des revendications 14 à 17,
caractérisé par le fait que
les marquages de synchronisation sont formés par des interstices de synchronisation (18) ayant une largeur prédéterminée à l'intérieur de la tension alternative redressée.

19. Circuit électrique de transmission d'informations selon revendication 11 et l'une des revendications 14 à 18,
caractérisé par le fait que
l'arrangement (22, 24, 24) utilisé pour la livraison de signaux provoquant le blocage des arrangements d'actionnement dans les postes de surveillance individuels, effectue un changement de niveau de la tension alternative redressée.

20. Circuit électrique de transmission d'informations selon l'une des revendications 3 à 19,
caractérisé par le fait que
chaque poste de surveillance (12A...E) possède un arrangement (39) utilisé pour produire un numéro de référence réglable, qui est amené vers un comparateur (38) avec le signal de comptage de l'arrangement compteur (36) du poste de surveillance, et où le signal de sortie du comparateur est dirigé vers l'arrangement de marquage (43, 44).

21. Circuit électrique de transmission d'informations selon l'une des revendications 3 à 21,
caractérisé par le fait que
la machine de fabrication est une machine de fabrication de fil, que les détecteurs de surveillance sont des détecteurs de casses de fil (27), qu'un arrangement d'actionnement sous forme d'un dispositif d'arrêt de mèche (29) est prévu dans chaque poste de surveillance, et où les dispositifs d'arrêt de mèche peuvent être déclenchés par les signaux de sortie des détecteurs de casses de fil.
